Europäisches Patentamt

European Patent Office

Office européen des brevets

(19)

(11) Publication number : **0 153 121 B2**

(12) **NEW EUROPEAN PATENT SPECIFICATION**

(45) Date of publication of the new patent specification : **18.10.95 Bulletin 95/42**

(51) Int. Cl.⁶ : **G01L 1/22, G01G 3/14**

(21) Application number : **85300896.9**

(22) Date of filing : **11.02.85**

(54) **Compensated load cell.**

(30) Priority : **13.02.84 US 579488**

(43) Date of publication of application : **28.08.85 Bulletin 85/35**

(45) Publication of the grant of the patent : **03.04.91 Bulletin 91/14**

(45) Mention of the opposition decision : **18.10.95 Bulletin 95/42**

(84) Designated Contracting States : **BE CH DE FR GB IT LI SE**

(56) References cited :
**EP-A- 0 067 664**
**EP-A- 0 089 209**
**DE-A- 2 916 427**
**DE-B- 2 856 607**

(56) References cited :
**FR-A- 2 473 709**
**GB-A- 2 101 753**
**US-A- 3 576 128**
**US-A- 4 107 985**
**US-A- 4 128 001**
**US-A- 4 282 748**

(73) Proprietor : **Mettler-Toledo, Inc.**
**350 West Wilson Bridge Road**
**Worthington Ohio 43085 (US)**

(72) Inventor : **Griffen, Neil C.**
**8521 Worthington Road**
**Westerville Ohio 43081 (US)**

(74) Representative : **Kraus, Jürgen Helmut,**
**Dipl.-Phys. Dr. et al**
**c/o Leinweber & Zimmermann**
**Rosental 7**
**D-80331 München (DE)**

EP 0 153 121 B2

EP 0 153 121 B2

## Description

The present invention relates to a load cell comprising two substantially parallel beams having longitudinal and lateral axes, means rigidly connecting one end of said beams together, means rigidly connecting the other end of said beams together, a pair of strain gages mounted on each of said beams, said gages being connected in a bridge circuit, and a compensating resistor connected in circuit with at least one of said gages, said compensating resistor having a properly determined value to make the output of said bridge circuit substantially independent of the position of a load along at least one of said axes, and to a method for compensating a load cell of this type for off-center load.

In weighing mechanisms employing a load cell of this type, an item to be weighed is usually placed upon a platter or platform supported by one end of the beams. It is well known that errors may arise if the weight is placed "off center", or other than in the central position it occupied during calibration of the weighing mechanism. Off-center loading may be longitudinal, along the central longitudinal axis of an elongated beam load cell, or lateral, along an axis perpendicular to the longitudinal axis, or both.

If the beams and other elements of a load cell were uniform and completely symmetrical, it would be theoretically possible for the weight to be placed at differnt positions on a platter supported by the load cell without affecting the response of the load cell. In practice, however, errors arise from placement of the load at different positions on the platter. The errors arise from slight variations in many factors. These include: (1) small variations in the positions of the strain gages on the beams; (2) variations in the bonding of the strain gages to the beams; (3) strain gage geometry variations; (4) strain gage resistance variations; (5) strain gage factor variations; (6) variations in load cell geometry; (7) variation in the thickness of any reduced sections of the beams; (8) variation in the location and/or geometry of any reduced sections; (9) variations in the compensation of the load cell beams; (10) variation in the strain in the load cell due to machining and other factors; and (11) variations in the lead wires to the connecting circuitry. Various ways have been suggested for compensating for the effects of off-center loading.

EP-A2-0,067,664 (US-A-4,380,175) discloses a load cell of the above-referenced type which is compensated for both longitudinal and lateral displacement of a load. For this purpose, in at least one pair of corresponding strain gages of the two parallel beams the strair gage on the one beam is laterally displaced from the central symmetry plane in one direction while the strain gage on the other beam is laterally displaced in the opposite direction.

US-A-3,576,128 discloses a dual beam load cell having resistors connected to the strain gages arranged along the center line of the beams while US-A-4,128,001 discloses a dual beam load cell which is compensated for lateral and longitudinal displacement of the load by removing material from certain locations on the beams.

US-A-4,282,748 relates to a single beam load cell wherein the radius of a fillet between the load section and the mounting section is adjusted so that the load cell becomes substantially insensitive to inboard-outboard loading. EP-A2-0,089,209 corresponding to co-pending US-A-4,453,609 (published 12-06-84) discloses an improved single beam load cell compensated for longitudinal and lateral displacement of the load. The compensation may be accomplished by honing in reduced areas of the beam or by mounting the strain gages at angles to the longitudinal axis of the beam and connecting appropriate resistor networks to the strain gages.

US-4,107,985 to Sommer discloses a single beam load cell between a pair of parallel flexure members. Material is removed from the beam by honing or filing between longitudinally spaced strain gages thereon to reduce the effects of off-center loading.

DE-A1-2,916,427 discloses a dual beam load cell in which a strain gage arrangement mounted on each beam comprises a pair of strain gages in parallel with the longitudinal axis of the beam in circuit with another strain gage pattern having the strain-sensitive elements oriented at an angle to the longitudinal axis of the beam. The further strain gage pattern is adjusted to generate a torsional signal of a magnitude to compensate a torsional error signal induced in the two strain gages as a result of off-center load. A resistive pattern also connected in the circuit is adjusted and functions to adjust the total resistance value of the overall arrangement to a standard value.

According to the invention, a load cell of the above-reference type is characterized in that at least one of said strain gages on each beam has at least a portion of the path of its strain sensing gage elements located on the central longitudinal axis of said beam oriented at such a slight angle to the longitudinal axis of said beam so that two of said gages tend to increase their output in response to the type of movement of the load being considered while the other two gages tend to decrease their output thereby causing the responses of said gages to movement of the load, when considered to be connected in said bridge circuit, to tend to cancel each other, so as to be correctible by connecting said compensating resistor (85-88) thereto.

The invention also provides a method of compensating a load cell for off-center load, said load cell comprising two substantially parallel beams (111, 112) having longitudinal and lateral axes, means (114) rigidly con-

2

necting one end of said beams together, means (115) rigidly connecting the other end of said beams together, a pair of strain gages (1, 2; 3, 4) mounted on each of said beams, said gages being connected in a bridge circuit, and a compensating resistor (85-88) connected in circuit with at least one of said gages to make the output of said bridge circuit substantially independent of the position of a load along at least one of said axes, characterized by orienting at least one of said gages on each beam with at least a portion of the path of its strain sensing gage elements located on the central longitudinal axis of said beam at such a slight angle to the longitudinal axis of said beam so that two of said gages tend to increase their output in response to the type of movement of the load being considered while the other gages tend to decrease their output thereby causing the responses of said gages to movement of the load, when considered to be connected in said bridge circuit, to tend to cancel each other so as to be correctible by connecting said compensating resistor (85-88) thereto, placing test compensating resistors in circuit with said gages prior to connecting said compensating resistor in circuit therewith, determining the response of said bridge circuit to loads applied off-center on said load cell, and using said response and the values of said test compensating resistors to calculate the proper values of said resistors to be connected for making the output substantially independent of the position of the load.

Figure 1 is a side view of a weighing mechanism incorporating a dual beam load cell in accordance with this invention.

Figure 2 is a top view of the weighing mechanism of Figure 1.

Figure 3 is a side view of a weighing mechanism similar to that of Figures 1 and 2 but with the strain gages positioned differently.

Figure 4 is a view of a fragment of the upper beam in the weighing mechanism of Figure 3 illustrating the position of the strain gages on the upper beam.

Figure 5 is a view similar to Figure 4 of the lower beam in the weighing mechanism of Figure 3.

Figures 6A-6E are top views of exemplary configurations of strain gages which may be used in a load cell according to the present invention.

Figure 7 is a top view of a weighing mechanism.

Figure 8 shows a suitable electrical bridge arrangement for interconnecting the strain gages and for connecting compensating resistor networks to the strain gages in a load cell.

Figure 9 is a graph illustrating the effect of connecting compensating resistors to the strain gages.

In accordance with this invention, it has been discovered that it is possible to better compensate for off-center loading of a scale arrangement incorporating dual beams as the load sensing element by connecting resistor networks to the strain gages if the position of the gages with respect to the neutral axis of the beam is made such that the gages produce a correctible response to off-center loading. The correctible response may be obtained by appropriately positioning the gages.

The object is to introduce a lack of symmetry to cause the gages to produce a response to off-set loading that is correctible by connecting resistors in circuit with one or more of the gages. The correctible response to off-set loading is obtained by displacing and/or rotating at least some of the gages with respect to the central longitudinal axis (as the best determinable representation of the neutral axis) of the beam. For example, the gages may be placed on the beam so that at least a portion of the path of the gage element is at a slight angle to the central longitudinal axis on the surface of the beam.

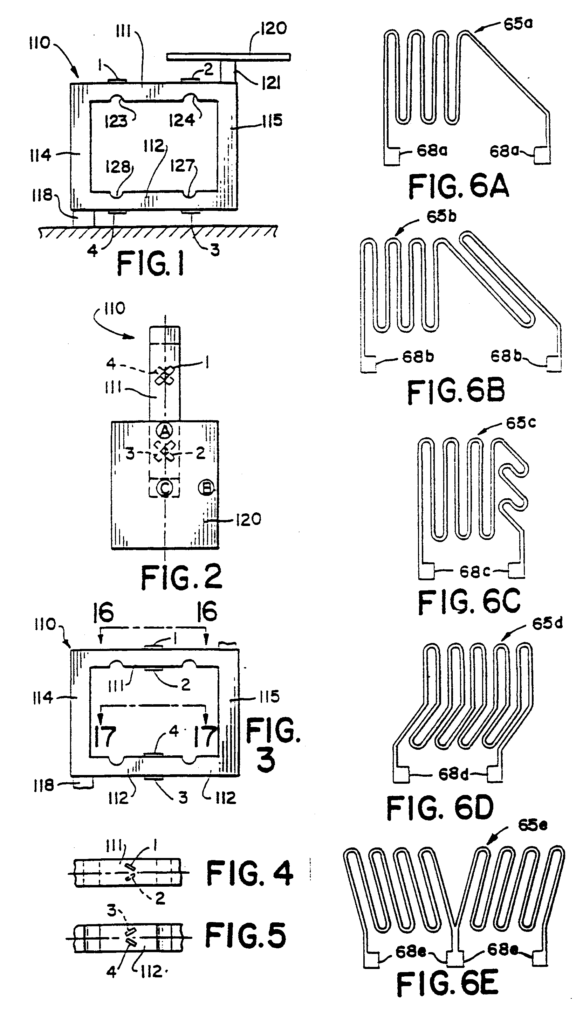

It has also been found that, rather than rotating and/or displacing conventional gages, strain gages of special construction, examples of which are shown at 65a to 65e in Figure 6, may be utilized. In the gages of Figure 6, at least a portion of the undulating path of the gage elements is at an angle to and/or displaced from the overall orientation of the gages as determined by the respective connection tabs 68a to 68e. The gages 65a to 65e are exemplary only and it will be appreciated that any gage having at least a portion of the path of its gage element at an angle to and/or displaced from the remainder of the path may be utilized. Certain patterns will, of course, be of more advantage than others depending upon the degree of offset correction needed. The special gages will usually be mounted on a beam such as beam 50 so as to be generally symmetrical about the longitudinal axis of the beam. The gages may, however, be displaced and/or rotated with respect to the longitudinal axis of the beam. In the descriptions which follow, reference to rotation and/or displacement of strain gages is intended to include the use of gages such as exemplified in Figure 6 as well as rotation and/or displacement of complete conventional gages.

Figures 1 and 2 show a dual beam load cell 110 according to the present invention. The load cell has two flexure beams 111 and 112, each of which is provided with strain gages. The left-hand ends (as viewed in Figure 13) of beams 111, 112 are connected by a vertical member 114 and the right hand ends by a vertical member 115. Members 114 and 115 are preferably integral with beam members 111 and 112 but if they are not so formed, they are rigidly interconnected with members 111 and 112.

Load cell 110 is supported at one end by a support member 118 and in turn supports a load receiving platform 120 through a member 121. Upper flexure beam 111 has two reduced sections 123 and 124 and lower beam 112 has similar reduced sections 127 and 128. Strain gages 1 and 2 are mounted on the upper surface of beam 111 adjacent reduced sections 123, 124, respectively while strain gages 3 and 4 are mounted on the bottom surface of lower beam 112 adjacent reduced sections 127, 128. As with the embodiments of this invention previously described, the reduced sections 123, 124 and 127, 128 are not required but are often provided since they tend to improve the performance of the load cell.

As shown in Figure 2, gages 1 to 4 are positioned on beams 111, 112 to be sensitive to an off-center load on platter 120 so that, as described above, load cell 110 can be more easily compensated for the effects of such off-center loading. In particular, gages 1 and 2 are positioned at opposite small angles to the longitudinal axis of beam 111 while gages 3 and 4 are so positioned on lower beam 112. Also, the vertically spaced pairs of gages 1, 4 and 2, 3 are positioned at opposite angles with respect to each other. The gages could be both displaced and rotated. Also, one or both gages could be applied to the opposite surface of one or both of the beams 111, 112. The primary criteria are that one gage be applied to each beam to sense tensile strain and the other to sense compressive strain and that the gages be positioned to provide a correctible response to off-set loading so that the effects of such loading can be compensated. Further, special strain gages, as exemplified in Figure 6 and described above, could also be employed in place of or along with conventional gages.

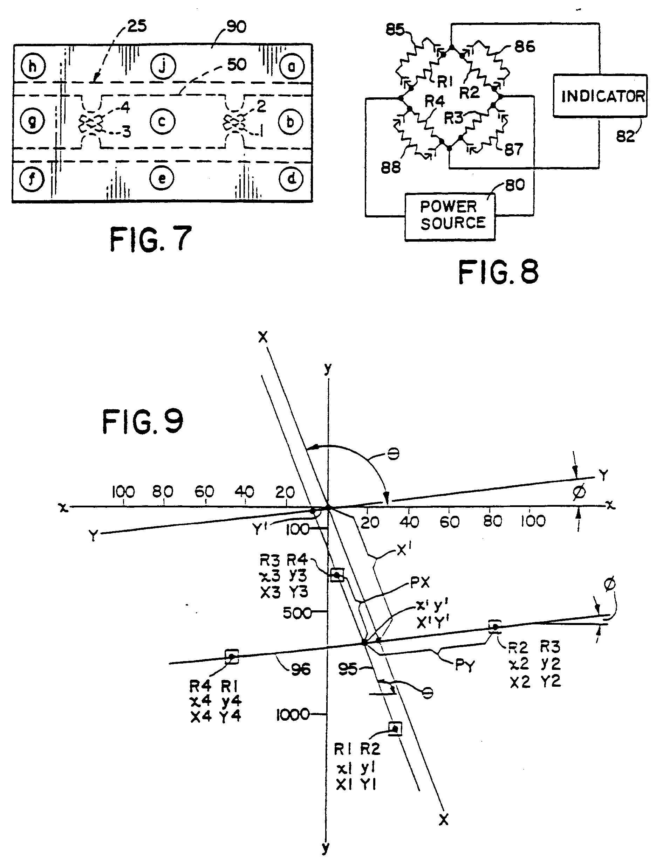

The dual beam load cell 110 of Figures 1 and 2 can be compensated for off-center loading, lateral or longitudinal or both, by connecting appropriate resistor networks to one or more of the gages. Appropriate resistor networks for such correction are determined in accordance with the same procedures as described below in connection with Figures 7-9. When the strain gages 1 to 4 are connected in a suitable bridge arrangement, test series and/or shunt resistors are connected with certain of the gages and readings taken with the weight positioned at longitudinally and laterally spaced locations on a scale platform and entered into a table such as Table I below. The data thus taken may then be used in the manner described below to determine appropriate resistor networks to be connected to certain of the gages to compensate for lateral and/or longitudinal off-center loading on scale platform 120.

Figure 3, 4 and 5 show the dual beam load cell 110 of Figure 1 and 2 with strain gages positioned somewhat differently from the gages shown in Figures 1 and 2. In Figure 3 to 5, gages 1 and 2 are positioned on opposite surfaces of beam 111 and are both rotated and displaced with respect to the longitudinal axis of beam 111 in opposite directions from each other. Similarly, gages 3 and 4 are applied to opposite surfaces of lower beam 112 and are rotated and displaced in opposite directions with respect to the longitudinal axis of beam 112. Gages 3 and 4 are preferably rotated and displaced oppositely from the corresponding gages 1, 2, respectively, on beam 111.

The dual beam load cell 110 with strain gages 1 to 4 mounted thereon as illustrated in Figures 3-5, can, in the same manner as described below, be compensated for off-center loading, lateral or longitudinal or both, by following the procedures described below and connecting appropriate resistor networks to one or more of the gages. Gages of special configuration, as exemplified in Figure 6 and described above, could, as in the previous embodiments, be used in place of conventional gages.

As is evident from Figures 1 to 6 and the discussions above, there are many ways to position the strain gages on one or more force responsive beam members to be sensitive to strains caused by offset loading and so that the effects of such off-set loading can be compensated. Generally, the pattern of gage placement on the beam or beams should be such that the responses to movement of the load of the respective gages, when considered to be connected in a bridge arrangement, tend to cancel each other. Thus, the pattern might be such that two of the gages would tend to increase their output in response to the type of shift being considered (longitudinal or lateral) while the other two gages would be seen to decrease their outputs. Also, when intending to correct for both lateral and longitudinal displacement of the load, the pair of strain gages that may have resistor networks attached to compensate for longitudinal off-set must not be the same pair that would have resistor networks attached to correct for lateral off-set. Bridge balance too, of course, must be maintainable. Application of these principles will yield many suitable orientations and patterns for placement of the gages to enable load shift compensation.

More specifically, consider equation (3) below and the load cell 110 of Figure 2 with its strain gages 1 to 4 connected in the bridge circuit of Figure 8 without compensating resistors. The change in the output of the bridge of Figure 8 resulting from moving the load from point C to point A in Figure 2 is proportional to $a1 - a2 + a3 - a4 = a$
where $a1$ to $a4$ are the changes in arm resistance due to moving the load from the center of the platter to position A and $a = a1 - a2 + a3 - a4$.

Similarly, for movement to position B on the platter, the change in output of the bridge is proportional to $b1 - b2 + b3 - b4 = b$
where $b1$ to $b4$ are the changes in arm resistance due to moving the load from the center of the platter to position B and $b = b1 - b2 + b3 - b4$.

If a and b are made substantially equal to zero then the load cell is compensated. According to the invention, this may be done by attenuating the gage factor of the appropriate individual gages by the addition of resistor networks so that both terms, a and b, are small or zero.

To accomplish this, the gages are preferably positioned on the beam or beams so that the signs of their resistance changes as a result of load shift (b1 to b4, a1 to a4) are such that the equations for both b and a contain both positive and negative terms, thus making it relatively easy to reduce b and a to near zero by attenuating the appropriate terms with resistor networks.

The equations for a and b with attentuation factors A become

$$a = (A1 \times a1) - (A2 \times a2) + (A3 \times a3) - (A4 \times a4)$$
$$b = (A1 \times b1) - (A2 \times b2) + (A3 \times b3) - (A4 \times b4).$$

In the dual beam load cell 110 of Figure 2, movement from the center of platter 120 to position A is a longitudinal load shift while movement from the center to position B is a transverse load shift. The gages are positioned such that the signs of the changes in resistance of the bridge arms, due to these load shifts, are as shown below.

|   | ARM 1 | ARM 2 | ARM 3 | ARM 4 |
|---|---|---|---|---|
| A | + | + | − | − |
| B | + | − | − | + |

That is, for shift to position A, arms 1 and 2 will show an increase in resistance and arms 3 and 4 will show a decrease in resistance. For shift to position B arms 1 and 4 will show increases and arms 2 and 3 decreases in resistance.

Recall that

$$a = (A1 \times a1) - (A2 \times a2) + (A3 \times a3) - (A4 \times a4)$$

Considering only the signs of the resistance changes a1 to a4, the above equation for a can be written as

| ARM 1 | | ARM 2 | | ARM 3 | | ARM 4 |
|---|---|---|---|---|---|---|
| (+) | − | (+) | + | (−) | − | (−) |

Absorbing the negative signs into the numbers in parentheses yields,

| ARM 1 | | ARM 2 | | ARM 3 | | ARM 4 |
|---|---|---|---|---|---|---|
| (+) | + | (−) | + | (−) | + | (+) |

Thus, there are two positive terms and two negative terms in the equation for a. If the uncompensated a is positive, arms 1 and 4 can be attenuated in order to reduce a, the change in bridge output resulting from shift of the load to position A in Figure 2, to zero. Conversely, if the uncompensated a is negative then arms 2 and 3 can be attenuated in order to reduce a to zero. Mathematically this can be accomplished by attenuating one or both arms. However, the resistor networks should be added in such a way as to maintain bridge balance.

For transverse displacement of the load, that is, to point B in Figure 2 the same approach is used.

$$b = (A1 \times b1) - (A2 \times b2) + (A3 \times b3) - (A4 \times b4).$$

using the signs of b1 to b4 determined above and then combining signs:

| ARM 1 | | ARM 2 | | ARM 3 | | ARM 4 |
|---|---|---|---|---|---|---|
| (+) | − | (−) | + | (−) | − | (+) |

| ARM 1 | | ARM 2 | | ARM 3 | | ARM 4 |
|---|---|---|---|---|---|---|
| (+) | + | (+) | + | (−) | + | (−) |

Here, the choices are to attenuate arms 1 and 2 of the bridge if b is a positive number and to attenuate arms

5

3 and 4 if b is negative. Note that the gage pairs resulting here are (1,2) and (3,4) while for the longitudinal shift case above they were (1,4) and (2,3). Thus, the gage pairs available for attenuation in the longitudinal and lateral directions are different and compensation for the two directions is substantially independent. This results from the gages having been positioned, off-set and/or rotated, on the beam or beams to tend to produce this result. The sizes of the attenuating resistors to be connected in circuit with the appropriate gages to achieve compensation can be deter-mined as described previously herein.

The strain gages on a load responsive beam or beams may be caused to produce a correctible response to off-set loading by physically altering the beam(s) in addition to rotating and/or displacing the gages on the beam.

The value of resistors to be connected to one or more of the gages 1 to 4 to effect compensation may be determined in accordance with the procedures disclosed in United States Patent No. 4,380,175 to Griffen.

After the load cell has been constructed and assembled as described above, the resistances ($R_1$, $R_2$, $R_3$ and $R_4$) of the strain gages are connected in a bridge circuit as shown in Figure 8 so that the adjacent pairs of gages 1, 2; 2, 3; 3, 4; and 4, 1 on the load cell structure are electrically adjacent in the bridge circuit. One pair of bridge terminals is connected to power source 80 and the other pair of bridge terminals is connected to an indicator 82. The indicator may be calibrated in any desired units, but for convenience, the units will be referred to herein as counts. After the bridge circuit has been connected as described, a test weight is then applied to the scale and the output of the bridge circuit is determined. At this time the compensating resistors 85, 86, 87 and 88 are not connected. As shown in the drawing, single compensating resistors are connected to the strain gages. However, any suitable type of resistor network may be employed including series resistors, parallel resistors or combinations of series and parallel resistors.

One method of determining the value of a resistor to compensate for longituginal errors is to connect two similar variable resistors to the strain gages at one end or the other of the load cell. These resistors are simultaneously varied while the test weight is moved along the longitudinal axis until the output of the bridge is substantially constant for all positions of the test weight along the longitudinal axis. Similarly, two variable resistors are connected to the strain gages on either the top or bottom of the load cell and these varied as the test weight is moved laterally to different positions until the lateral movement of the test weight does not produce any variation in output of the bridge. This arrangement is satisfactory if correction is desired in only one direction, either longitudinal or transverse. However, there is an interaction between the transverse and longitudinal shift compensations if corrected independently. Whenever one compensation is made, it will change the amount of compensation required for shift of the other type. Thus, numerous corrections must be made in an iterative manner until the shift specifications are met. This approach is slow and costly.

A more direct method of determining the value of the resistor networks to be applied to the various strain gages is to apply a test weight at the comers of the scale platter at positions a, d, f and h as shown in Figure 7. With a test weight at each of these positions, a pair of test resistors is connected to each of the pairs of adjacent strain gages and the output of the indicator determines the desired resistances. In the exemplary embodiment for strain gages having a resistance of approximately 350 ohms, the value of suitable test resistors has been found to be approximately 4,000 ohms. Thus, while a test weight is in position a, the two test resistors are connected first to the strain gages 1 and 2, second to strain gages 2 and 3, next to 3 and 4, and finally to 4 and 1. The output of the indicator in each of these instances is employed as described. Next, the test weight is moved to position d and the above procedure repeated. It is then repeated with the test weight in positions f and h. From these test results, it is possible to calculate the desired compensating resistors which will accommodate displacement of the load or weight on the scale, both in the longitudinal direction and the lateral direction, if desired. The displacement may be corrected for only one of these directions when desired.

The effects of connecting resistors of different values in parallel with the strain gages may be calculated in the following manner. The output of a single strain gage is often expressed as $\frac{\Delta G}{G}$ where G is the resistance of the strain gage. If a shunt resistor of S ohms is connected across the strain gage, the output is reduced to $A\left(\frac{\Delta G}{G}\right)$ where A is an attenuation constant having a value between 0 and 1 and is approximately equal to

$$A = \frac{S}{S + G}.$$

Now, the output of a strain gage bridge may be expressed as $\frac{\Delta E}{V}$ where 4$\Delta E$ is the change in output and V is the applied voltage. Thus, for a load at the center c (Figure 7) of the scale platform:

$$\left(\frac{\Delta E}{V}\right)_c = \frac{1}{4}\left\{\frac{\Delta G_1}{G_1} - \frac{\Delta G_2}{G_2} + \frac{\Delta G_3}{G_3} - \frac{\Delta G_4}{G_4}\right\} \tag{1}$$

Now, if the load is shifted to position e on the platform the output of the bridge becomes

$$\left(\frac{\Delta E}{V}\right)_e = \frac{1}{4}\left\{\frac{\Delta G_1 + r_1}{G_1} - \frac{\Delta G_2 + r_2}{G_2} + \frac{\Delta G_3 + r_3}{G_3} - \frac{\Delta G_4 + r_4}{G_4}\right\} \tag{2}$$

where $r_1$, $r_2$, $r_3$, and $r_4$ represent the change in the output of the respective strain gages due to shifting of the load from c to e. Subtracting equation (1) from equation (2):

$$\left(\frac{\Delta E}{V}\right)_e - \left(\frac{\Delta E}{V}\right)_c = \frac{1}{4}\left\{\frac{r_1}{G_1} - \frac{r_2}{G_2} + \frac{r_3}{G_3} - \frac{r_4}{G_4}\right\} \tag{3}$$

Now connecting a test shunt resistor S across strain gages 1 and 2 and with the load at c

$$\left(\frac{\Delta E}{V}\right)_{c_S} = \frac{1}{4}\left\{A_T\left(\frac{\Delta G_1}{G_1}\right) - A_T\left(\frac{\Delta G_2}{G_2}\right) + \frac{\Delta G_3}{G_3} - \frac{\Delta G_4}{G_4}\right\} \tag{4}$$

where $A_T$ is the attenuation produced by the test shunt resistor. With the load now shifted to e

$$\left(\frac{\Delta E}{V}\right)_{e_S} = \frac{1}{4}\left\{A_T\left(\frac{\Delta G_1 + r_1}{G_1}\right) - A_T\left(\frac{\Delta G_2 + r_2}{G_2}\right) + \frac{\Delta G_3 + r_3}{G_3} - \frac{\Delta G_4 + r_4}{G_4}\right\} \tag{5}$$

Now subtracting equation (4) from (5)

$$\left(\frac{\Delta E}{V}\right)_{e_S} - \left(\frac{\Delta E}{V}\right)_{c_S} = \frac{1}{4}\left\{A_T\frac{r_1}{G_1} - A_T\frac{r_2}{G_2} + \frac{r_3}{G_3} - \frac{r_4}{G_4}\right\} \tag{6}$$

Subtracting equation (6) from (3)

$$\frac{1}{4}\left\{\frac{r_1}{G_1} - A_T\frac{r_1}{G_1} - \frac{r_2}{G_2} + A_T\frac{r_2}{G_2}\right\} =$$

$$\frac{1}{4}\left\{(1-A_T)\frac{r_1}{G_1} - (1-A_T)\frac{r_2}{G_2}\right\} = \frac{1}{4}(1-A_T)\left\{\frac{r_1}{G_1} - \frac{r_2}{G_2}\right\} \tag{7}$$

Assume, for example that a 4,000 ohm shunt resistor across gages 1 and 2 reduces the shifting error (position c to position e, Figure 7) from 54 units to 34. To more fully correct for the shifting error and obtain a corresponding final attenuation $A_F$ and value of shunt resistor to produce the correction, it follows from (7)

$$\frac{1 - A_T}{1 - A_F} = \frac{54 - 34}{54 - 0} = \frac{20}{54} \quad (8)$$

but

$$A_T = \frac{4000}{4000 + 350} = 0.9195$$

so the final A should be $A_F = 0.783$.

Alternatively, the midpoint between the test values for the test shunt across gages 1 and 2 and the test value of 65 with the shunt across gages 3 and 4 may be used instead of the test value obtained with no shunt resistors connected to the bridge.

Thus:

$$\frac{1 - A_T}{1 - A_F} = \frac{\frac{1}{2}(65 + 34) - 34}{\frac{1}{1}(65 + 34) - 0} = \frac{49.5 - 34}{49.5} = \frac{15.5}{49.5} \quad (8a)$$

and $A_F = 0.743$ and $S = 1012$ ohms. This method usually gives a better approximation of the desired value of the shunt resistor.

The example above involved compensation for transverse shift only, that is, from point c toward point e (or point j) in Figure 7. If it is desired to compensate for longitudinal shift only, that is, from point c to point b, the above procedure may be followed. The values obtained with the test shunt resistors across either strain gages 2 and 3 or 1 and 4 or across both pairs would be used in this instance.

There is an interaction between the transverse and longitudinal shift compensations. If corrected independently, when one compensation is made it will change the amount of compensation required for shift of the other type. Thus, numerous corrections would have to be made in an interative manner until the shift specifications are met. This approach is slow and costly.

Equations may be written representing both the required longitudinal and transverse corrections. The constants are determined by tests and then the desired amount of correction or compensation is determined.

For example, let

$$Y = Ay + Bx + E \qquad \text{and}$$

$$(9)$$

$$X = Cy + Dx + F \qquad \text{where}$$

y       is the change in indicated weight observed when the applied load is shifted in one direction, identifed as the y direction, and is a function of the values of the test compensating resistors;

x       is the change in indicated weight observed when the applied load is shifted in a direction substantially orthogonal to the y direction and identified as the x direction, and is a function of the values of the test compensating resistors;

Y       is the change in load shift error resulting from the addition of compensating resistors to either opposite pair of adjacent strain gages, for example gages 2,3 or 4,1 in Figures 7 and 8;

X       is the change in load shift error resulting from the addition of compensating resistors to either opposite pair of adjacent gages not used in determining Y, for example gages 1,2 or 3,4; and A, B, C, D, E and F are constants.

As defined above, the values of X and Y are substantially independent of each other. The units of Y, X, y, and x are increments of weight or, more specifically as used in the examples, counts. Also, it should be noted that the x and y directions do not necessarily correspond to transverse and longitudinal directions on platform 90.

One way to determine the constants in equation (9) is to place a test weight on platform 90 in different positions with test compensating resistors connected to different pairs of strain gages and utilize the output indications from indicator 82. One procedure utilizes data from placing the test weight at positions b, e, g and j or at positions a, d, f and h, as shown in Figure 7, with test compensating resistors connected to the various pairs of strain gages. Table I below shows one set of such data where the test compensating shunt resistors S is again 4000 ohms.

TABLE I

| Position | $R_1, R_2$ | $R_2, R_3$ | $R_3, R_4$ | $R_4, R_1$ |
|---|---|---|---|---|
| g | 26555 | 26549 | 26515 | 26618 |
| b | 26521 | 26466 | 26511 | 26664 |
| e | 26005 | 26167 | 26355 | 26290 |
| j | 27091 | 26863 | 26685 | 27012 |
| $g-b = x_n$ | 34 | 83 | 4 | -46 |
| $e-j = y_n$ | -1086 | -696 | -330 | -722 |

In Table I, the differences between the readings at opposite sides (g,b and e,j in Figure 7) of platform 90 are determined and recorded as x and y values with test compensating resistors in place across the respective sets of strain gages. Readings need not be taken without test compensating resistors in place so that there is not a "No R" column in Table I. The "No R" points are determined from Table I as will become apparent below.

If the data from Table I are plotted on an x-y axis as shown in Figure 9, one line 95 can be drawn through the points for $R_1R_2$ and $R_3R_4$ and another line 96 intersecting the first through the points for $R_2R_3$ and $R_4R_1$. The lower the value of the test compensating shunt resistors S connected to the strain gages, the further the plotted points are from the intersection of the lines. The intersection is close to the uncompensated or "No R" point for load shift in either or both of the x and y directions. Changes in shift produced by placing shunt resistors across a pair of strain gages is represented by movement along the proper line. Increasing values of shunt resistors move the point along the line toward the intersection while decreasing values move it away from the intersection.

Since the origin of the x,y axis represents the point of zero load shift error and the point x′,y′ represents the load shift error without compensation, complete compensation for load shift can be obtained by placing the appropriate compensating resistance values across the appropriate strain gages such that the point x′,y′ is made to coincide with the origin of the x,y axis. The proper values of compensating resistances to accomplish this may be determined mathematically using Figure 9 and Table I. First, the x,y axes are rotated to define X,Y axes parallel to the respective intersecting lines 95, 96. The X and Y coordinates (X′,Y′) of the point x′,y′ can then be determined to obtain the appropriate values of compensating resistors required.

The relationship of the x,y axes to the X,Y axes is given by

$$y = Y \sin \emptyset + X \sin \theta, \text{ and}$$

$$(10)$$

$$x = Y \cos \emptyset + X \cos \theta$$

where $\emptyset$ and $\theta$ are the angles shown in Figure 9. Solving for Y and X yields

$$y = \frac{\cos \theta}{\sin (\phi - \theta)} y - \frac{\sin \theta}{\sin (\phi - \theta)} x$$

$$(11)$$

$$x = \frac{\cos \phi}{\sin (\phi - \theta)} y + \frac{\sin \phi}{\sin (\phi - \theta)} x$$

Solving for the coordinates X',Y' of the point x' ,y' in the X,Y coordinate system

$$Y' = \frac{\cos \theta}{\sin (\phi - \theta)} y' - \frac{\sin \theta}{\sin (\phi - \theta)} x'$$

$$X' = - \frac{\cos \phi}{\sin (\phi - \theta)} y' + \frac{\sin \phi}{\sin (\phi - \theta)} x'$$

where y' and x' are, as previously defined, the intersection coordinates of the lines 95,96.

y' = -709.0 and x' = 19.04 Now solving for Y' and X'

Y' = -9.17 and X' = -707.79 from Figure 9 and Table I.

The slope of each line is the tangent of the angle of inclination to the x-axis:

$$\tan \phi = 0.2016 \qquad \tan \theta = -25.20$$

$$\phi = 11.40° \qquad \theta = 92.27°$$

$$\sin \phi = 0.1977 \qquad \sin \theta = 0.9992$$

$$\cos \phi = 0.9803 \qquad \cos \theta = -0.0396$$

$$\sin (\phi - \theta) = -0.9873$$

From this point the calculated values X' and Y' are utilized with the actual change caused by the test shunt resistors to determine the size of the needed final compensating resistors.

The next step is to find $A_{FY}$, the final attenuation term for changes in Y direction. From this the final trim resistors $S_{FY}$ can be calculated. As in equation (8), a ratio is formed

$$\frac{1 - A_{TY}}{1 - A_{FY}} = \frac{P_Y}{Y'}$$

where $P_Y$ is the weight change between the weight represented by the point x',y' (or X',Y') and the weight represented by the coordinates of the test reading on line 96 in the direction of the needed correction. This weight change is represented in Figure 9 by the distance along line 96 from x',y' to $x_2,y_2$. In this example, from Table I and Figure 9

$$P_Y = \sqrt{(- 696 + 709)^2 + (83 - 19.04)^2} = 65.27$$

Also from equation (8), with a test resistance of 4000 ohms, $A_{TY} = 0.9195$ and $1-A_{TY} = 0.0805$. Then

$$\frac{0.0805}{1 - A_{FY}} = \frac{65.27}{9.17}$$

$$A_{FY} = 0.9887 = \frac{S_{FY}}{S_{FY} + G}, \text{ and } G = 355 \text{ ohms}$$

$$S_{FY} = 31,060 \text{ ohms}.$$

Similarly for $A_{FX}$

$$\frac{1 - A_{TX}}{1 - A_{FX}} = \frac{P_X}{X'}$$

$P_X$ is represented in Figure 9 by the distance along line 95 from x',y' to $x_3,y_3$.

$$P_X = \sqrt{(- 330 + 709)^2 + (4 - 19.04)^2} = 379.30$$

$$1 - A_{TX} = 0.0805$$

$$\frac{0.0805}{1 - A_{FX}} = \frac{P_X}{X'} = \frac{379.3}{707.79}$$

EP 0 153 121 B2

$$A_{FX} = 0.8498$$
$$S_{FX} = 2009 \text{ ohms.}$$

Thus, a 2009 ohm resistor should be placed across gage 4, and a 31,060 ohm resistor placed across gage 2. Combining $S_{FX}$ and $S_{FY}$ in

$$\frac{S_{FX} \cdot S_{Fy}}{S_{FX} + S_{FY}}$$

gives a resistor of 1887 ohms to be placed across gage 3.

Thus, the error due to shifting of the weight on the scale platform may be reduced to a very small value.

As mentioned above, the test and final resistor networks connected to the strain gages may include series resistors rather than shunt resistors as in the exemplary embodiment described. In that case the attenuation factor A for a series resistor connected to the strain gage must be used instead of that for a shunt resistor. The attenuation factor for the series resistor is $A = \dfrac{G}{G+T}$ where G is the resistance of the strain gage and T is the resistance of the series resistor. Except for using series resistors and the attenuation factor A for the series resistors, the procedure and calculations for compensating for load shifts are the same as those described above.

## Claims

1. A load cell comprising two substantially parallel beams (111, 112) having longitudinal and lateral axes, means (114) rigidly connecting one end of said beams together, means (115) rigidly connecting the other end of said beams together, a pair of strain gages (1, 2; 3, 4) mounted on each of said beams, said gages being connected in a bridge circuit, and a compensating resistor (85-88) connected in circuit with at least one of said gages, said compensating resistor having a properly determined value to make the output of said bridge circuit substantially independent of the position of a load along at least one of said axes, **characterized** in that at least one of said strain gages on each beam has at least a portion of the path of its strain sensing gage elements located on the central longitudinal axis of said beam oriented at such a slight angle to the longitudinal axis of said beam so that two of said gages tend to increase their output in response to the type of movement of the load being considered while the other two gages tend to decrease their output thereby causing the responses of said gages to movement of the load, when considered to be connected in said bridge circuit, to tend to cancel each other, so as to be correctible by connecting said compensating resistor (85-88) thereto.

2. A method of compensating a load cell for off-center load, said load cell comprising two substantially parallel beams (111, 112) having longitudinal and lateral axes, means (114) rigidly connecting one end of said beams together, means (115) rigidly connecting the other end of said beams together, a pair of strain gages (1, 2; 3, 4) mounted on each of said beams, said gages being connected in a bridge circuit, and a compensating resistor (85-88) connected in circuit with at least one of said gages to make the output of said bridge circuit substantially independent of the position of a load along at least one of said axes, **characterized** by orienting at least one of said gages on each beam with at least a portion of the path of its strain sensing gage elements located on the central longitudinal axis of said beam at such a slight angle to the longitudinal axis of said beam so that two of said gages tend to increase their output in response to the type of movement of the load being considered while the other gages tend to decrease their output thereby causing the responses of said gages to movement of the load, when considered to be connected in said bridge circuit, to tend to cancel each other so as to be correctible by connecting said compensating resistor (85-88) thereto, placing test compensating resistors in circuit with said gages prior to connecting said compensating resistor in circuit therewith, determining the response of said bridge circuit to loads applied off-center on said load cell, and using said response and the values of said test compensating resistors to calculate the proper values of said resistors to be connected for making the output substantially independent of the position of the load.

## Patentansprüche

1. Wägezelle mit zwei im wesentlichen parallelen, Längsund Querachsen aufweisenden Balken (111, 112), einem ein Ende der Balken starr miteinander verbindenden Mittel (114), einem das andere Ende der Bal-

11

ken starr miteinander verbindenden Mittel (115), einem auf je einem der Balken angeordneten Paar von Dehnungsmeßstreifen (1, 2; 3, 4), wobei die Meßstreifen in einer Brückenschaltung zusammengeschaltet sind, und einem mit mindestens einem der Meßstreifen schaltkreismäßig verbundenen Kompensationswiderstand (85-88), der einen geeignet bestimmten Wert aufweist, durch den das Ausgangssignal der Brückenschaltung im wesentlichen unabhängig von der Position einer Last längs mindestens einer der Achsen gemacht wird, dadurch gekennzeichnet, daß mindestens einer der Dehnungsmeßstreifen auf je dem Balken mit mindestens einem Bereich des Verlaufs seiner auf der zentralen Längsachse des Balkens gelegenen dehnungsempfindlichen Meßelemente unter einem derartigen kleinen Winkel zur Längsachse des Balkens ausgerichtet ist, daß zwei der Meßstreifen ansprechend auf die in Betracht gezogene Art der Bewegung der Last zu einer Vergrößerung ihres Ausgangssignals tendieren, während die anderen beiden Meßstreifen zu einer Verringerung ihres Ausgangssignals tendieren und dadurch bei Betrachtung in Zusammenschaltung in der Brückenschaltung eine Tendenz zu einer derartigen gegenseitigen Auslöschung der Antworten der Meßstreifen auf die Bewegung der Last hervorrufen, daß sie durch das Anschließen des Kompensationswiderstandes (85-88) korrigierbar sind.

2. Verfahren zum Kompensieren einer Wägezelle gegen außermittige Belastung, wobei die Wägezelle zwei im wesentlichen parallele, Längs- und Querachsen aufweisende Balken (111, 112), ein ein Ende der Balken starr miteinander verbindendes Mittel (114), ein das andere Ende der Balken starr miteinander verbindendes Mittel (115), ein auf je einem der Balken angeordnetes Paar von Meßstreifen (1, 2; 3, 4), wobei die Meßstreifen in einer Brückenschaltung zusammengeschaltet sind, und einen mit mindestens einem der Meßstreifen schaltungsmäßig verbundenen Kompensationswiderstand (85-88), durch den das Ausgangssignal der Brückenschaltung im wesentlichen unabhängig von der Position einer Last längs mindestens einer der Achsen gemacht wird, aufweist, gekennzeichnet durch derartiges Ausrichten mindestens eines der Meßstreifen auf jedem Balken mit mindestens einem Bereich des Verlaufs seiner auf der zentralen Längsachse des Balkens gelegenen dehnungsempfindlichen Meßelemente unter einem derartigen kleinen Winkel zur Längsachse des Balkens, daß zwei der Meßstreifen ansprechend auf die in Betracht gezogene Art der Bewegung der Last zu einer Vergrößerung ihres Ausgangssignals tendieren, während die anderen beiden Meßstreifen zu einer Verringerung ihres Ausgangssignals tendieren und dadurch bei Betrachtung in Zusammenschaltung in der Brückenschaltung eine Tendenz zu einer derartigen gegenseitigen Auslöschung der Antworten der Meßstreifen auf die Bewegung der Last hervorrufen, daß sie durch das Anschließen des Kompensationswiderstandes (85-88) korrigierbar sind, schaltungsmäßiges Verbinden von Testkompensationswiderständen mit den Meßstreifen, bevor der Kompensationswiderstand damit schaltungsmäßig verbunden wird, Bestimmen der Antwort der Brückenschaltung auf an die Wägezelle außermittig angelegte Lasten, und Anwenden der Antwort und der Werte der Testkompensationswiderstände zum Berechnen der geeigneten Werte der Widerstände, die anzuschließen sind, um das Ausgangssignal von der Position der Last im wesentlichen unabhängig zu machen.

**Revendications**

1. Cellule dynamométrique comprenant deux fléaux parallèles (111, 112) ayant des axes longitudinaux et latéraux, un moyen (114) raccordant de manière rigide une extrémité desdits fléaux ensemble, un moyen (115) raccordant de manière rigide l'autre extrémité desdits fléaux ensemble, une paire de jauges de contrainte (1, 2; 3, 4) montée sur chacun des fléaux, lesdites jauges étant reliées selon un circuit en pont, et une résistance de compensation (85-88) raccordée en circuit avec au moins une des jauges, ladite résistance de compensation ayant une valeur correctement déterminée pour rendre la sortie dudit circuit en pont sensiblement indépendante de la position d'une charge le long d'au moins l'un desdits axes, caractérisée en ce qu'au moins l'une des jauges de contrainte sur chaque fléau a au moins une partie du trajet de ses éléments de détection de contrainte située sur l'axe longitudinal dudit fléau et orientée selon un angle faible par rapport à l'axe longitudinal dudit fléau, de sorte que lesdites jauges tendent à accroître leurs sorties en réponse au type de mouvement de la charge considérée alors que les deux autres jauges tendent à diminuer leurs sorties, conduisant ainsi les réponses desdites jauges à un mouvement de la charge, lorsqu'on suppose qu'elles sont connectées dans ledit circuit en pont, à tendre à s'annuler l'une l'autre, de sorte à pouvoir être corrigées en leur connectant ladite résistance de compensation (85-88).

2. Procédé de compensation d'une cellule dynamométrique pour un décentrage de la charge, ladite cellule dynamométrique comprenant deux fléaux (111, 112) sensiblement parallèles ayant des axes longitudinaux et latéraux, un moyen (114) raccordant de manière rigide une extrémité desdits fléaux ensemble,

**12**

un moyen (115) raccordant l'autre extrémité desdits fléaux ensemble, une paire de jauges de contrainte (1,2; 3, 4) montée sur chacun desdits fléaux, lesdites jauges étant reliées dans un circuit en pont, et une résistance de compensation (85-88) connectée en circuit avec au moins l'une desdits jauges pour rendre la sortie dudit circuit en pont pratiquement sensiblement indépendante de la position d'une charge le long d'au moins l'un desdits axes, caractérisé par le fait d'orienter au moins l'une desdites jauges sur chaque fléau avec au moins une partie du trajet de ses éléments de détection de contrainte située sur l'axe longitudinal dudit fléau et orientée selon un angle faible par rapport à l'axe longitudinal dudit fléau, de sorte que lesdites jauges tendent à accroître leurs sorties en réponse au type de mouvement de la charge considérée alors que les deux autres jauges tendent à diminuer leurs sorties, conduisant ainsi les réponses desdites jauges à un mouvement de la charge, lorsqu'on suppose qu'elles sont connectées dans ledit circuit en pont, à tendre à s'annuler l'une l'autre, de sorte à pouvoir être corrigées en leur connectant ladite résistance de compensation (85-88), de placer des résistances de compensation d'essai en circuit avec lesdites jauges avant de connecter ladite résistance de compensation en circuit avec celles-ci, de déterminer la réponse dudit circuit en pont aux charges appliquées de manière décentrée sur ladite cellule dynamométrique, et d'utiliser ladite réponse et les valeurs desdites résistances de compensation d'essai pour calculer les valeurs appropriées desdites résistances à connecter pour rendre la sortie sensiblement indépendante de la position de la charge.

FIG. 1

FIG. 2

FIG. 3

FIG. 4

FIG. 5

FIG. 6A

FIG. 6B

FIG. 6C

FIG. 6D

FIG. 6E

FIG. 7

FIG. 8

FIG. 9